# EUROPEAN PATENT APPLICATION

(11) **EP 4 538 949 A1**
(43) Date of publication of application: **16.04.2025**
(21) Application number: 23020468.7
(22) Date of filing: 12.10.2023
(51) Int. Cl.: G06Q 20/06, G06Q 20/36

(54) **SECURE WALLET SERVICE PROVIDER UNIT**

(71) Applicant: Giesecke+Devrient advance52 GmbH, 81677 München (DE)
(72) Inventor: Sequeira, Severino, 81677 München (DE); Bohn, Markus, 81677 München (DE)
(74) Representative: Giesecke+Devrient IP

(57) **Abstract**

A secure wallet service provider unit (1a) of a transaction system (10), the transaction system (10) comprising token wallets (2a, 2b, 9a, 9b) and a remote token register (5), wherein local token wallets (9a) of the transaction system (10) exchange tokens of the transaction system (10) in local transactions (7),
the secure wallet service provider unit (1a) comprising a plurality of hosted token wallets (2a) of the transaction system,
in a normal mode the secure wallet service provider unit (1a) is configured to exchange tokens (204) between the hosted token wallets (2a) of the secure wallet service provider unit (1a) and other token wallets (2b) of the transaction system (10) in remote transactions (4). The present secure wallet service provider unit (1a) is configured to temporarily switch into a virtual local mode. In the virtual local mode the secure wallet service provider unit (1a) is configured to exchange tokens (204) between the hosted token wallets (2a) and other token wallets (2b) of the transaction system (10) in virtual local transactions (27).

## Description

The invention relates to a secure wallet service provider unit comprising a plurality of hosted token wallets of a transaction system. The invention also relates to an electronic transaction system in particular a digital currency transaction system.

Tokens - also referred to as digital assets, electronic coins, coin data sets - may represent any digital asset, in particular a digital currency, preferably a central bank digital currency, short CBDC. These tokens are issued and deleted by an issuing unit of the payment transaction system, such as an issuing authority, or a central bank unit or a commercial bank unit, hereinafter also referred to as secure token issuing unit.

Electronic token transactions and/or the storage of tokens must be safe and secure and so, means for protecting confidentiality, integrity, and availability of exchanged and/or stored token data must be implemented. This is especially true for electronic payment transactions and associated payment transactions and payment storages in which a monetary value is linked with each token. Secure token wallets are thus widely used to exchange the tokens. Different token wallet types exist. The presently relevant wallet types are local token wallets and hosted token wallets. Local token wallets - such as e.g. smart cards, secure USB sticks, SIM or secure contactless tags - are typically used for exchanging the tokens, that locally reside in such a local token wallet. They enable local transactions in the transaction system. Hosted token wallets are provided by (or hosted on) a wallet service provider unit. Typically, the wallet service provider unit includes a plurality of hosted token wallets, which may be owned by different participants of the transaction system.

WO 2023/011758 A1 relates to an improved wallet service provider unit comprising a plurality of hosted token wallets of a transaction system comprising a remote token register. WO 2023/011758 A1 discloses the preamble portion of present claim 1.

According to an object of the invention, a transaction system shall be provided with improved performance, wherein preferably the security level shall remain.

The above-identified objectives are solved with the features of the independent patent claims. Further advantageous embodiments are described in the dependent patent claims.

In an aspect of the present invention there is provided a secure wallet service provider unit of a transaction system. The transaction system comprises token wallets and a remote token register, wherein local token wallets of the transaction system exchange tokens of the transaction system in local transactions. The secure wallet service provider unit comprises a plurality of hosted token wallets of the transaction system. In a normal mode of the secure wallet service provider unit, the secure wallet service provider unit is configured to exchange tokens between the hosted token wallets of the secure wallet service provider unit and other token wallets of the transaction system in remote transactions. The secure wallet service provider unit is configured to temporarily switch into a virtual local mode. In the virtual local mode the secure wallet service provider unit is configured to exchange tokens between the hosted token wallets and other token wallets of the transaction system in virtual local transactions.

The secure wallet service provider unit only temporarily switches into the virtual local mode such that resulting changes, such as e.g. overall response time and/or single transaction time and/or security aspects, are limited in time. For example, local transactions and remote transactions are both selected for the transaction system such that they each provide a high security level and a high performance, however e.g. the number and the order of sub steps and/or the combination of security measures may be optimized for the local or remote context. Furthermore, it is advantageous to use virtual local transactions in a virtual local mode, instead of adding a temporary arbitrary mode, in the secure wallet service provider unit. In particular, local transactions of the hosted token wallets are referred to as virtual local transactions, since they are only virtually local (the other wallet still is remote). It could be further noted that either (none or) one or more of the hosted token wallets may be used in token exchanges during the virtual local mode of the secure wallet service provider unit. In the virtual local mode of the secure wallet service provider unit for any of the hosted token wallets of the secure wallet service provider unit, which is requested/selected to be used in a token exchange, the (one or more) tokens would be exchanged in a virtual local transaction. In the virtual local mode tokens may be exchanged in virtual transactions, but may not be exchanged in remote transactions. Preferably, in a normal mode of the secure wallet service provider unit tokens are exchanged in remote transactions, but may not be exchanged in virtual transactions. In each token exchange at least one token is exchanged, particularly sent to the other token wallet and/or received from the other token wallet.

Preferably the secure wallet service provider unit further comprises a token exchange management unit for the hosted token wallets of the wallet service provider unit. The token exchange management unit performs the token exchange for the hosted token wallets (comprising one or more token). The token exchange management unit (or the secure wallet service provider unit) may store a mode status, indicating either the normal mode or the virtual local mode of the token exchange management unit (and/or the secure wallet service provider unit). Upon switching the secure wallet service provider unit, the mode status is changed accordingly.

In preferred embodiments for a new token of a hosted token wallet, the new token being created or received in the virtual local mode, the secure wallet service provider unit is configured to mark the new token as a virtual local mode token, not ready to be used in the normal mode, and/or at least partly store the new token separately from normal mode tokens, ready to be used in the normal mode, of the hosted token wallet. Preferably the new token is stored in a separate virtual local mode token storage area of the hosted token wallet or in a separate virtual local mode token wallet associated with the hosted token wallet.

The secure wallet service provider unit temporarily switches into the virtual local mode. It switches from the normal mode into the virtual local mode and switches back to the normal mode, in particular switches back after a predetermined virtual local mode time or upon a back switching trigger. Preferably the secure wallet service provider unit - for at least one hosted token wallet used in the virtual local mode - prepares the used hosted token wallet for the normal mode before using it in the normal mode. The secure wallet service provider unit may for example search for new tokens marked as a virtual local mode token and/or for new tokens at least partly separately stored. Furthermore, registration data of one or more token may be sent to the token register in the step of preparing. In a sub-step of the preparing the marking of the new token may be deleted and/or the new token may be moved from the separate virtual local mode token storage area to the normal token storage area of the hosted token wallet or moved from the separate virtual local mode token wallet to the hosted token wallet. Hosted token wallets of the secure wallet service provider unit may comprise a used-virtual marker (indicating whether the hosted token wallet was used in the virtual local mode). After switching back to the normal mode, preferably the mode status of the token management exchange unit (and/or the secure wallet service provider unit) already indicating the normal mode of operation again, the used-virtual markers and/ or the new tokens may be used to identify the used hosted token wallets within the hosted token wallets of the secure wallet service provider unit.

In preferred embodiments the secure wallet service provider unit further comprises a registration data storage area storing registration data for at least one hosted token wallet used in the virtual local mode, in particular storing the registration data of at least one new token of the hosted token wallet. Hence, the new token is partly stored in the hosted token wallet and partly in the registration data storage area, in particular only the registration data of the new token are stored in the registration data storage area. Token data elements of the token stored in the hosted token wallet may be a monetary value, a token secret and/or a token type. Optionally the registration data storage area optionally temporarily stores registration data received from local wallets, particularly received in the virtual local mode of the secure wallet service provider unit.

Typically registration data are transaction individual (registration data) and may be token individual (registration data). Hence, registration data may even differ for tokens of the same transaction, e.g. if it includes separate signatures for each token (reference).

The secure wallet service provider unit may comprise a registration management unit. In the normal mode of the secure wallet service provider unit the registration management unit receives registration data from local wallets and forwards the registration data received from the local wallets to the token register. In the virtual local mode of the secure wallet service provider unit the registration management unit may also receive registration data from local wallets.

It is particularly advantageous if the secure wallet service provider unit receives a mode switching trigger. In preferred variants the secure wallet service provider unit may only switch into the virtual local mode, after receipt of a mode switching trigger. The mode switching trigger may e.g. be received from the token register or from a token issuer unit; e.g. a central bank unit of the central bank issuing the tokens of the transaction system. It may also be received by another wallet service provider unit. In other variants (or in addition) the secure wallet service provider unit may check, if a virtual local mode condition is fulfilled. It switches if the condition is fulfilled and does not switch if the condition is not fulfilled. A condition could for example be a status of the token register, such as "not reachable" or "not operating" and/or a status of the secure wallet service provider unit, such as "partial maintenance". Preferably, the secure wallet service provider unit only switches, if the mode switching trigger is received and/or the virtual local mode condition is fulfilled.

A mode switching trigger should be digitally signed, preferably by the token register or the token issuer unit, or include at least one digital signature, preferably of the token register or the token issuer unit. If the mode switching trigger is received from another wallet service provider unit, it preferably is signed by the token register or the token issuer unit. However in a variant, it could be signed by/include the signature of at least two other secure wallet service provider units. The secure wallet service provider unit(s) may check if a virtual local mode pre-condition is fulfilled. If the pre-condition is fulfilled they can sign a mode switching trigger, which will however only be accepted if it includes at least two (or three) signatures. A pre-condition could for example be a status of the token register, such as "not reachable" or "not operating". Preferably, the secure wallet service provider unit checks if the pre-condition is fulfilled before switching (does not switch if not fulfilled).

The mode switching trigger can include a starting time for the virtual local mode. Hence, the secure wallet service provider unit receives the mode switching trigger and switches the mode, if the starting time is reached. The mode switching trigger may include a virtual local mode period/time for the virtual local mode (defining a period of time for the mode). The period could alternatively be predefined, e.g. for each mode switching trigger. The virtual local mode period preferably is between 2 minutes and 24 hours, more preferably between 5 minutes to 6 hours, more preferably between 10 minutes and 3 hours. In variants the secure wallet service provider unit may receive a back switching trigger, particularly before the virtual local mode period has expired.

In preferred embodiments the secure wallet service provider unit checks, if the secure wallet service provider unit and/or the hosted token wallet is blocked for the virtual local mode. In the transaction system multiple secure wallet service provider units may exist, wherein at least one blocked secure wallet service provider unit is blocked for the virtual local mode. If the secure wallet service provider unit is blocked for the virtual local mode, it will not switch into this mode. The secure wallet service provider unit(s) may comprise a virtual local mode blocking configuration, which preferably can be set to blocked or released and/or can be set by the operator of the secure wallet service provider unit. The secure wallet service provider unit will check its configuration before switching the mode. The multiple hosted token wallets of the secure wallet service provider unit may comprise a virtual local mode blocking configuration, which preferably can be set to blocked or released and/or can be set either by the owner of the hosted token wallet and/or the operator of the secure wallet service provider unit. If a hosted token wallet is blocked for the virtual local mode, the secure wallet service provider unit will not use it the virtual local mode. The secure wallet service provider unit in the virtual local mode may check if a hosted token wallet to be used is blocked, before using it in the virtual local mode, preferably by checking the virtual local mode configuration of the hosted token wallet.

In further preferred variants the secure wallet service provider unit in the virtual local mode checks a virtual local mode limit. The limit is limiting a monetary value, preferably the sum of monetary values, exchanged in the virtual local mode. The secure wallet service provider unit may comprise a first (overall) limit for the multiple hosted token wallets and/or a second (individual) limit for a (or at least some of the) hosted token wallet(s). The first or overall limit can be set by the operator of the secure wallet service provider unit and/or can be predetermined by the token issuer, e.g. if a first limit set by the operator is lower than a first limit predetermined by the token issuer. The second or individual limit can be set by the owner of the hosted token wallet and/or the operator of the secure wallet service provider unit. The limit may include a sending limit and/or a receiving limit and/or an exchanging limit. The limit may limit the monetary value of a transaction or the sum of monetary values to be received and or to be send.

For further details of a wallet service provider unit or of a limit for hosted token wallets, it can be referred to WO 2023/011758 A1 or WO 2023/011759 A1.

As already indicated the other token wallets are remote token wallets, preferably hosted token wallets of at least one other secure wallet service provider unit. Hence, the other token wallets are physically remote from the secure wallet service provider unit. In the electronic transaction system a remote token exchange protocol is used in remote transactions and a local token exchange protocol is used in local transactions, including the virtual local transactions.

A token exchange protocol defines the (sub) steps of the exchange (and at least most of the security measures used). The token exchange protocol is independent of the communication protocol (TCP, IP, HTTP, T=1, NFC, Bluetooth, BLE ...) used. The secure wallet service provider unit is typically remotely connected to the token register and/or to another wallet service provider unit and/or to the other token wallets via a network (e.g. internet or 3G to 5G mobile network) and/or via a remote network communication protocol (e.g. IP, TCP, HTTP(S) or 3G to 5G mobile communication protocol). Preferably now, the virtual local transactions use a local token exchange protocol via a remote communication protocol/remote communication network.

Local transactions may also be referred to as offline transactions, whereas the remote transactions are online transactions. Hence, in other words in the virtual local mode an offline token exchange protocol is used online.

The local wallets typically only include a short range wireless communication interface, such as Bluetooth, including BLE, or NFC or RFID, and/or a contact-based local communication interface, such as USB contacts or ISO 7816 contacts.

In advantageous embodiments the token register is a token reference register. In the (token exchange protocol of the) normal mode of the secure wallet service provider unit a token reference of the token is exchanged (and a token secret is not exchanged), whereas in the (token exchange protocol of the) virtual local mode a token secret of the token may be exchanged. The token secret is a (token individual) data element of the token. The token reference preferably is assigned to the token to uniquely identify the token in the transaction system. The token reference is used to register the token in the token reference register and may be a data element of the token. The token reference may be derivable from the token secret, e.g. from a secret key of a public key pair (or private-public-key pair) of the token including the token secret key and the token public key (used as the token reference). It then does not have to be provided as a separate data element in the token. In other words, remote transactions include a token reference exchange and a communication to the token reference register, whereas virtual local transactions include no communication to the token reference register and preferably may include a token secret exchange. The same applies for local transactions.

The token may be an asset token. The token may be a currency token. The token may be a central bank issued token, such as a CBDC. The token may be a digital currency token from other commercial issuers. In the respective normal/virtual local mode the secure wallet service provider unit preferably exclusively uses the normal/virtual local transactions for the token exchange between the plurality of hosted token wallets of the secure wallet service provider unit and other hosted token wallets. Local token wallets preferably exclusively use local transactions for a token exchange.

The hosted token wallets typically comprise: at least one token, preferably each including at least a monetary token value and a token secret as token data elements; and/ or a wallet ID; and/or a wallet authentication key; and/or a wallet certificate, preferably for the wallet ID and/or the wallet authentication key. The plurality of hosted token wallets preferably consist of data only, particularly since any code required could be part of the token exchange management unit.

In preferred embodiments, the wallets are uniquely assigned to a participant of the electronic transaction system. Hence, the participant may send a transaction request (send token of value x to wallet y) to the secure wallet service provider unit.

In preferred embodiments, the token register is a token reference register of the electronic transaction system. It comprises one or more token references, each token reference being uniquely assigned to a token in the transaction system.

Each token may comprise a monetary value and a token secret, such as a private key of a token-individual key pair as token-individual token elements. The token reference is preferably derivable from the token secret/private key, more preferably it is the public key of the token individual key pair. So, the token-individual key pair forms a unique assignment between token and token reference. For more details regarding a token reference register it could be e.g. referred to WO 2023/011756 A1.

In the transaction system wallets may create one or more new tokens in a transaction based on one or more stored tokens. Token wallets may replace one or more stored tokens by one or more new tokens created in a value-neutral manner. For example, a new token having the monetary value required for the transaction can be created. A token may be split into tokens and/or tokens may be merged into tokens. For further details related to such splitting and/or merging it is exemplary referred to WO 2020 / 212 331 A1 or WO 2023/011756 A1. Registration data, typically including a registration request for the new token(s) are created in the transaction and may form a further data element of a token.

Even though in many different ways, like distributed computing and/or backup systems and/ or background amendments, entities such as the token register may be continuously provided, in few extraordinary cases - particularly related to the role of the token register - this may not be possible. The present solution is most advantageous for such a case, when the token register is temporarily not available.

The electronic transaction system in further embodiments comprises a separate transaction log register. Separation of log register and token register provides additional advantages for the transaction system. The secure wallet service provider unit is configured to send log data to the transaction log register for each transaction.

The log data preferably comprising the monetary value of the transaction and the wallet identities or wallet pseudonyms of both wallets (the hosted token wallet and the other token wallet). Local wallets of course will also send log data for each transaction to the log register.

Furthermore in the transaction system typically prior to the step of performing a transaction, in a transaction preparation the two wallets of the transaction determine the transaction type to be performed, local transaction, virtual local transaction or remote transaction. Subsequent to one or more transactions the transaction data may be sent to log register (and/or in cases of local transactions to the token register).

In a further aspect of the invention a transaction system is provided including at least one or more secure wallet providing unit(s) as described above, a remote token register and optionally local token wallets. The system may comprise a log register and/ or be adapted as indicated above.

In the following, the invention or further embodiments and advantages of the invention are explained in more detail based on drawings, wherein the drawings describe only embodiments of the invention. Identical components in the drawings are given the same or related reference signs. Elements drawn with dashed lines are considered as optional elements.

The drawings are not to be regarded as true to scale, and individual elements of the drawings may be shown in exaggeratedly large or exaggeratedly simplified form.
Fig. 1 shows a known transaction system.
Fig. 2a shows an exemplary embodiment of a secure wallet providing unit in a normal mode.
Fig. 2b shows the secure wallet providing unit in a virtual local mode.
Fig. 2c shows the secure wallet providing unit in a normal mode after the end of the virtual local mode.
Fig. 3 illustrates an exemplary embodiment of a switching process according to the invention.
Fig. 4 shows a process including a transaction step.
Fig. 5 shows another exemplary embodiment of a secure wallet providing unit in a virtual local mode.
Fig. 6 shows yet another exemplary embodiment of a secure wallet providing unit.

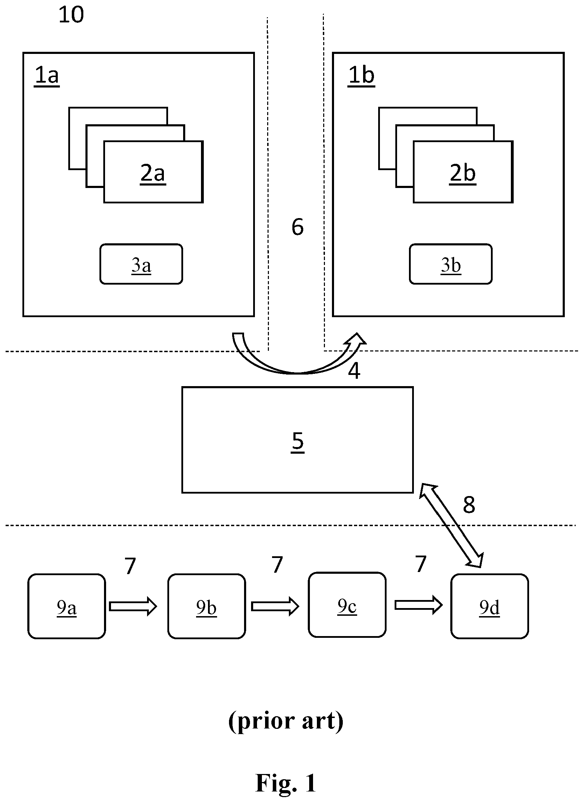

A known transaction system 10 is illustrated in Fig. 1. The transaction system 10 is a payment transaction system, wherein tokens, preferably digital currency tokens, are exchanged between token wallets 2a, 2b, 9a-9d of the transaction system 10. The token wallets 2a, 2b, 9a-9d comprise one or more token of the transaction system. The tokens are issued by a token issuer (not shown) of the transaction system 10. The token issuer could be a national (or regional) central bank, such that the tokens then would be CBDC tokens in a CBDC transaction system. The transaction system 10 further comprises a token register 5. Tokens of the transaction system are registered in the token register 5.

The transaction system 10 comprises a first wallet providing unit 1a and a second wallet providing unit 1b. Each comprising a plurality of hosted token wallets 2a, 2b and a token exchange management unit 3a, 3b. A remote communication network 6, like the internet, connects the wallet providing units and the token register 5. The transaction system 10 further comprises local token wallets (or physical wallets), like smart cards, USB tokens or RFID tokens.

Hosted token wallets 2a, 2b of the wallet providing units 1a, 1b exchange tokens in remote transactions 4. A remote transaction 4 includes a remote communication step with the token register 5. Local token wallets 9a-9d exchange tokens in local (or offline) transactions 7. A local transaction 7 does not require a remote connection and/or does not require a remote communication step with the token register 5. Local transactions can be performed offline (both wallets having no remote connection available).

Token wallets 2a, 2b, 9a-9d of the transaction system 10 create one or more new token(s) based on one or more stored tokens in a transaction and exchange at least one new token. For example, a wallet may split one (or more) stored token into two or more new tokens or merge two or more stored tokens into one (or more) tokens. The new tokens replace the stored tokens of the wallet. The wallets thus can create and exchange a new token having the monetary value requested in the transaction. Of course, the sum of the monetary values of new and previously stored tokens shall be equal. The creation of new tokens in wallets is value-neutral and based on stored, i.e. existing, tokens.

In the transaction system 10 new tokens created in wallets are registered in the token register 5. Wallets may send registration replacement requests to the token register 5. A registration replacement request indicates the new token(s) to be registered and the previous token(s) to be deregistered. Hence, only the token issuer may add issued tokens to the token register, whereas wallets can only replace existing token registrations in a value-neutral manner.

The token register preferably is a token reference register using a token reference for each token, wherein more preferably the token reference is derivable from a token secret of the token. The token reference may be a public key of a token individual key pair comprising the token secret as a secret key and the public key (which can be derived from the secret key). For more details regarding a token reference register it could be e.g. referred to WO 2023/011756 A1.

Local token wallets 9a-9d exchange tokens in the local transactions 7. In the local transaction 7 a local token exchange protocol is used. The local token exchange protocol does not require an online connection and/ or does not include registration of new tokens. Multiple local transactions 7 can be performed, before registration data are sent 8 to the token register 5. For example only, in Fig. 1 local token wallet 9a could split a first token into new second and third tokens. The new second token is sent to local token wallet 9b and includes registration data of the first split. Local token wallet 9b may further split (and/or merge) the received second token and add registration data for the second split to the new tokens. One of the new tokens is send to local token wallet 9c which again creates a new token including additional registration data for the third split and/or merge and sends it to local token wallet 9d. Finally, local token wallet 9d may send 8 the registration data created in the previous local transactions 7 to the token register 5.

The hosted token wallets 2a-2b exchange tokens in the remote transactions 4 and a remote token exchange protocol is used. Communication is performed via a remote communication protocol of the remote network 6 and the remote token exchange protocol includes at least a step of sending registration data to the token register 5 and/or a step of receiving confirmation data from the token register 5. The confirmation data preferably confirm the registration of a new token (reference) and/or receive a digital signature of the token register for the new token (reference). For example, WO 2023/ 036458 A1 illustrates further details of a preferred remote token exchange protocol. For further details of a wallet service provider unit, it can be referred to WO 2023/011758 A1 or WO 2023/011759 A1.

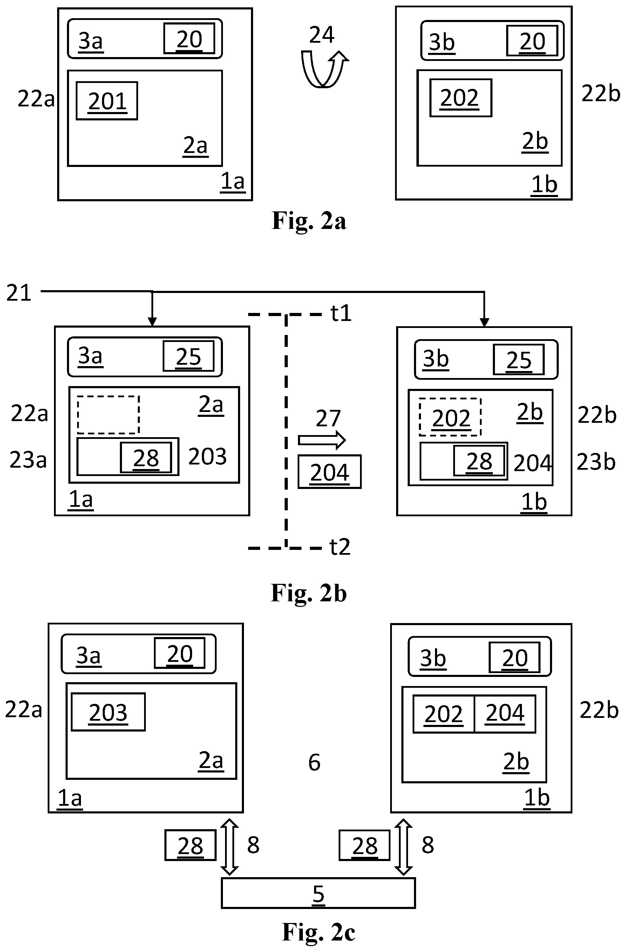

Fig. 2a to 2c illustrate an improved secure wallet provider unit 1a, for example in a transaction system 10 as illustrated in Fig. 1. The token (reference) register and the local token wallets are not shown, particularly since they can remain unamended. Fig. 2a shows the improved secure wallet provider unit 1a in a normal mode. Fig. 2b illustrates the secure wallet provider unit 1a temporarily switched into a virtual local mode. Finally Fig. 2c illustrates the secure wallet provider unit 1a switched back to the normal mode.

The (first) secure wallet provider unit 1a of Fig. 2a comprises a plurality of hosted token wallets, only one (first) hosted token wallet 2a being illustrated. Secure wallet provider units provide hosted token wallets for customers.

The hosted token wallet 2a comprises a first token 201. The first token 201 being stored in a normal mode token storage area 22a of the hosted token wallet 2a. A token exchange management unit 3a of the secure wallet provider unit 1a comprises a mode status indicating the current mode of the token exchange management unit 3a and/or the secure wallet provider unit 1a. In Fig. 2a the mode status 20 indicates a normal mode.

Another (second) secure wallet provider unit 1b basically includes the corresponding units 2b, 3b. In particular the hosted token wallet 2b includes a second token 202 stored in a normal mode storage area 22b. A token exchange management unit 3b (and thus the wallet provider unit 1b) also is in a normal mode, storing a mode status 20 indicating this mode.

In the normal mode, the secure wallet provider unit 1a and/or 1b use remote transactions 24 to exchange tokens for the multiple hosted token wallets 2a/2b. The remote transaction 24 includes a step of registering a new token in the token register 5 and/or a step of receiving a register confirmation from the token register 5, in particular for a new token and/or for a stored token.

For example, in a remote transaction 24 for the hosted token wallet 2a a new token 202 may have been created in the secure wallet provider unit 1a (by token exchange management unit 3a). A stored token of the hosted token wallet 2a may have been split into new tokens 201, 202. The new tokens 201202 would have been registered in the token register and then the new token 202 has been sent - optionally together with a registration confirmation of the token register - to the remote hosted token wallet 2b. Preferably, however in remote transactions 24, a new token 202 is created for the receiving hosted token wallet 2b (in the token exchange management unit 3b of secure wallet provider unit 1b). Token reference data for the new token 202 are sent from the receiving hosted token wallet 2b to the hosted token wallet 2a. A token individual token secret of the new token, preferably a secret key (of a public key pair of the token including the secret key and a public key forming a token reference of the token), however remains in the secure wallet provider unit 1b and is not sent. Based on the token reference data of the new token 202 and a stored token (not shown) of the hosted token wallet 2a the token reference of the new token 202 (and optionally new token 201) is registered in the token register 5 by secure wallet provider unit 1a. A registration confirmation of the token register 5 for the new token(s) 202 (201) is received in the secure wallet provider unit 1a. The registration confirmation for the new token 202 is sent to the hosted token wallet 2b. Hence, a token secret of the new token (or of the stored token) does not have to be exchanged, but token reference data are exchanged only.

As illustrated in Fig. 2b the secure wallet provider unit 1a temporarily switches from the normal mode to a virtual local mode. Accordingly, the secure wallet provider unit 1a is in the virtual local mode only for a virtual local mode time (Δt = t2 - t1). Δt typically will be above 2 minutes and below 24 hours, more preferably between 10 minutes to 6 hours.

In the virtual local mode the secure wallet provider unit 1a performs at least one or more virtual local transactions 27 for the hosted token wallets 2a of the secure wallet provider unit 1a (instead of remote transactions 24). In the virtual local transaction 27 a token exchange between remote hosted token wallets 2a/2b is performed, e.g. a first new token 204 is transmitted. A token secret of the first new token 204 and/or registration data 28 for registration of the first new token 204 in the token register 5 are transmitted in the virtual local token exchange protocol. However, no data is exchanged with the token register 5 in the virtual local token exchange protocol.

The changed mode status 25 of the token exchange management unit 3a in Fig. 2b indicates the virtual local mode of the secure wallet provider unit 1a.

A mode switching trigger 21 may be received by the secure wallet provider unit 1a (and by the secure wallet provider unit 1b). The mode switching trigger 21 instructs the secure wallet provider unit 1a to switch into the virtual local mode. It preferably defines a fixed switching point of time t1, e.g. including date, time and optionally time zone, and/or either the virtual local mode time Δt or a back switching point of time t2, again e.g. including date, time and optionally time zone. After having received the switching trigger, e.g. at t=0, the secure wallet provider unit 1a switches into the virtual local mode at t=t1 and back to the normal mode at t=t2.

The mode switching trigger 21 is preferably received from and/or signed by either the token register 5 or by a token issuer unit (not shown), such as a central bank unit of the central bank being the issuer of the tokens in the transaction system. The secure wallet provider unit 1a will check the validity of the signature included in the mode switching trigger 21.

In the virtual local mode, the secure wallet provider unit 1a receives a transaction request for hosted token wallet 2a. In our example the customer requests a token having a monetary value of 20 to be transferred to from his hosted token wallet 2a to the hosted token wallet 2b in the secure wallet provider unit 1b. Stored token 201 has a monetary value of 200 units (200,00 CBDC units) and thus is not transferred but split into the new first token 204 having the monetary value of 20 and a second new token 203 having the remaining monetary value of 180. The first token 204 is transmitted to the hosted token wallet 2b of the secure wallet provider unit 1b in a virtual local transaction 27. The transferred token 204 includes registration data 28 required for registering the token 204 in the token register 5. The second token 203 remains in the hosted token wallet 2a. It also includes registration data 28 required for registering the token 203 in the token register 5. Registration data of a token are at least transaction individual (data) and may be token individual (data). Hence, only registration data 28 of the tokens 203, 204 from the one virtual local transaction 27 may be identical, e.g. if a common signature is used, but could be different, e.g. if separate signatures are used.

As further illustrated in Fig. 2b normal mode tokens (stored tokens) and virtual local mode tokens (new tokens) are separately stored in the hosted token wallet 2a (2b). Normal mode tokens are stored in the normal token storage area 22a (22b) and virtual local tokens are stored in the virtual local token storage area 23a (23b). Hence, after splitting the stored (normal mode) token 201, into the new tokens 203, 204, the normal token storage area 22a is empty, unless further stored tokens exist in the hosted token wallet 2a. New token 203 including its own registration data 28 is stored in the virtual local token storage area 23a of the hosted token wallet 2a. New token 204, including its own registration data 28, is (received and) stored in the virtual local token storage area 23b of the hosted token wallet 2b. Multiple virtual local transactions 27 for different hosted token wallets 2a and/or the same hosted token wallet 2a may occur during the virtual local mode time Δt, i.e. before the secure wallet provider unit 1a switches back into the normal mode (at t= t2).

In Fig. 2c the secure wallet provider unit(s) 1a (and 1b) are back in a normal mode, as indicated by status mode 20 of the token exchange management unit(s) 3a (and 3b). The new token(s) 203 (and 204) are now registered 8 at the token register 5, by sending the registration data 28 to the token register 5. After successful registration, the token(s) 203 (and 204) - without the registration data 28 - are moved from the normal token storage area 23 to the normal token storage area 22a. Separated storage - as indicated in Fig. 2b and 2c - is the preferred variant. However, alternatively both token types could be stored together. For example they could either be marked as being normal tokens or virtual local tokens or even more complicated being evaluated upon access as normal tokens or virtual tokens (e.g. by checking if registration data exist in or for the token). After such a preparation for the normal mode of the hosted token wallet(s) 2a (and 2b) used for transactions in the virtual local mode, it (they) can be used again for remote transactions in the normal mode.

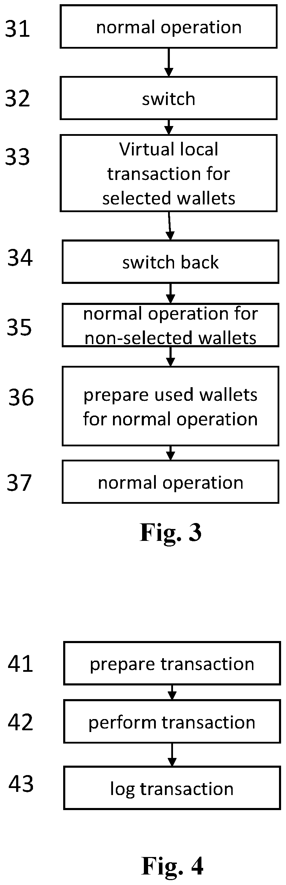

Fig. 3 exemplary illustrates steps in the switching process. In the beginning at step 31 the secure wallet provider unit operates in a normal mode. In the normal mode remote transactions are used for the hosted token wallets of the customer in the secure wallet provider unit. Step 32 may comprise a step of checking, if secure wallet provider unit is blocked for the virtual local mode. For example, the secure wallet provider unit may comprise a virtual local mode configuration, which indicates either that the secure wallet provider unit is blocked (shall not switch) or not blocked (released for the mode/may switch).The secure wallet provider unit then switches 32 from the normal mode into the virtual local mode. Now virtual local transactions are performed 33 for one or more of the hosted token wallets.

Before using a hosted token wallet in a virtual local transaction, the secure wallet provider unit (e.g. as a part of step 33) may perform a step of checking either if the hosted token wallet is blocked in this mode and/or if a monetary value limit for the virtual local mode is exceeded. Each of the hosted token wallets may be individually blocked for the virtual local mode, e.g. by means of a virtual local mode configuration. Furthermore, a monetary value limit may be stored for the whole secure wallet provider unit or for each or selected individual hosted token wallets thereof. The monetary value limit limits the sum of monetary values which can be exchanged, for example it may include a sending limit and a receiving limit for the wallet. If a checked condition is not met (blocked/exceeded) the requested transaction is not performed.

The wallets used in the virtual local mode or for which the customer requested a transaction in this mode, may be called used or selected wallets. After switching back 34 into the normal mode, any unused/non-selected hosted token wallets and/or unused (old) tokens can be directly used again in remote transactions (normal operation). The used hosted token wallets and/or the new tokens however are prepared 36 for the normal mode first and thereafter also can be used again in the normal mode (remote transactions). The preparation 36 particularly comprises a sub-step of registration of the new tokens created in the virtual local mode.

Fig. 4 shows a process including a transaction step 42. It further illustrates that a preparation step 41 will occur prior to the transaction 42, which may be any of the transactions above. In the preparation step 41 the wallets to be used and the monetary value of the transaction are identified, furthermore a step of checking - as described above for a wallet limit or a blocked wallet - may be performed in step 41. Finally, in a step independent of the transaction 42 the transaction may be logged 43 in the transaction system, preferably by sending log data to a transaction register (not shown) of the transaction system.

In particular the separation of token (reference) register 5 and the transaction register enables selective control of data privacy and/or system surveillance in the transaction system. The token register, preferably a token reference register, does not include any ownership information or only pseudonym ownership information for the tokens in the transaction system. It may contain the monetary value information of tokens or not (e.g. masked monetary value in WO2020/212337A1). The transaction register in a first variant preferably only includes encrypted and/or pseudonymized transactions data (see e.g. WO2022/008322A1). In further variants the transaction register includes the monetary value of the transaction and only an identifier of the receiving token wallet (not the sending wallet identifier or the sending wallet identifier only in encrypted form).

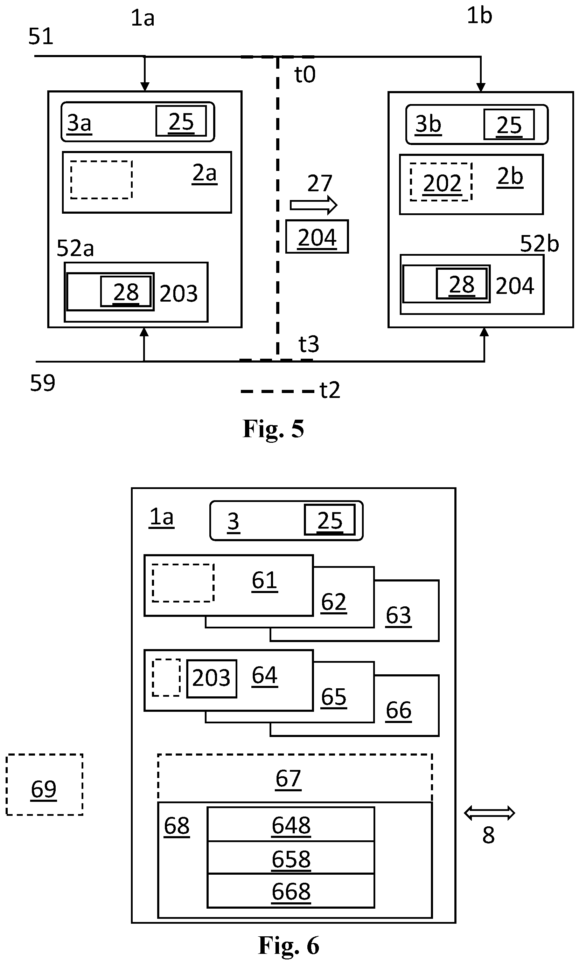

Fig. 5 is similar to Fig. 2b, since it shows another embodiment of the secure wallet provider unit 1a in the virtual local mode and a virtual local transaction 27. The following focusses on the various independent aspects of the embodiment shown in Fig. 5 to the above embodiments.

In Fig. 5, first a mode switching trigger 51 is received and the secure wallet provider unit 1a directly switches into the virtual local mode (at the time t= t0, which is equal to zero, if defined as the time of receipt). Hence, a mode switching trigger 51 may instruct the secure wallet provider unit 1a to switch into the virtual local mode directly (or at a defined switching point of time included in the trigger). The mode switching trigger 51 may include a virtual local mode time Δt or the back switching point of time t2 (Δt=t2-t0). In alternatives the virtual local mode time Δt is predefined, e.g. set to one or six hours for each mode switching trigger.

Further in Fig. 5 a back switching trigger 59 is received (at t=t3). The back switching trigger 59 instructs the secure wallet provider unit 1a to switch back from the virtual local mode into the normal mode, preferably either directly as illustrated in Fig. 5 or at a point of time t3 included in the trigger. t3 may be smaller than t2, as initially triggered. Hence, the back switching trigger 59 allows to shorten the actual virtual local mode time Δt (Δt = t3-t0).

Moreover, Fig. 5 illustrates another way for separating the stored tokens 201, 202 from the new tokens 203, 204. One or more normal tokens may be stored in the hosted token wallet 2a (2b), as indicated with dotted lines. For the hosted token wallet 2a (2b) used in the virtual transaction 27, a virtual local token wallet 52a (52b) is created, which includes the new (or virtual local mode) token 203 (204). The secure wallet provider unit 1a (1b) for hosted token wallets used in virtual local transactions comprises a separate temporary virtual local token wallet respectively. The preparation of the used hosted token wallet for the normal mode, after switching back into the normal mode, is easier. The secure wallet provider unit 1a (1b) simply resolves all temporary virtual local token wallets (preferably by sending the registration data to the token register and moving the token into the associated hosted token wallet).

Finally, variants of the switching trigger 51 will be explained now. Typically, the switching trigger 51 will be received from the token register or a token issuer unit and will include a corresponding signature. In a variant the switching trigger 51 it is received from another secure wallet provider unit but is signed by the token register or the token issuer unit. In another variant, the switching trigger 51 is received from and signed by another secure wallet provider unit. In this variant the secure wallet provider unit 1a will only switch into the virtual local mode, if a switching pre-condition is fulfilled and either the switching trigger includes at least two signatures from secure wallet provider units or at least two and switching triggers are received from secure wallet provider units. Hence, secure wallet provider units may check, if the switching pre-condition is fulfilled and create a corresponding signature for and/or in a switching trigger. Only if three (or four) secure wallet provider units have determined that the pre-condition is fulfilled, two (or three) signatures and one internal check, the secure wallet provider unit switches into the virtual local mode. Moreover, the receipt of a switching trigger in Fig. 2b or 5 may be replaced by a step of checking a switching condition in the secure wallet provider unit. A pre-condition (or condition) could for example be a status of the token register, such as "not reachable" or "not operating" and/or a status of the secure wallet service provider unit, such as "partial maintenance".

Fig. 6 basically shows two further options in a secure token wallet provider unit 1a. Again these options are independent from each other and basically combinable into any of the above embodiments.

First, another variant of at least partly separating new and stored tokens is addressed. The secure token wallet provide unit 1a includes hosted token wallets 61, 62, 63 not used in the virtual local mode and used hosted token wallets 64, 65, 66 each including at least one new token 203. Registration data 648, 658, 668 of the new tokens of the used hosted token wallets 64, 65, 66 are stored in a separate registration data storage area 68 of the secure token wallet provide unit 1a. Hence, the registration data of a new token is stored separately from the new token and preferably all registration data of new tokens are stored together (in registration data storage area 68). The used hosted token wallets 64-66 may be marked as used in the virtual local mode and/or the registration data storage area 68 may comprise a link to the hosted token wallet for each registration data entry 648, 658, 668.

Second, an optional additional unit of the secure token wallet provide unit 1a can be explained. The secure token wallet provide unit 1a may comprise a registration management unit 67. The registration management unit 67 is configured to send 8 registration data 648, 658, 668 of the hosted token wallets 64, 65, 66 and/or of local token wallets 69 to the token register. Hence, the registration management unit 67 registers the new tokens in the token register.

The registration management unit 67 - in the normal mode and/or in the virtual local mode of the secure token wallet provide unit 1a - may receive registration data from multiple local token wallets 69 and send the received registration data to the token register. Optional confirmation data received from the token register will be send back to the respective local token wallet 69 (if received).

### REFERENCE SIGNS

- 1a, 1b: secure wallet service provider unit
- 2a, 2b: hosted token wallet
- 3a, 3b: token exchange management unit
- 4: remote transaction
- 5: token register
- 7: local transaction
- 8: registration
- 9a-9d: local token wallet
- 10: transaction system

- 20: normal mode status
- 21: mode switching trigger
- 22a, 22b: normal token storage area
- 23a, 23b: virtual local token storage area
- 24: remote transaction
- 25: virtual local mode status
- 27: virtual local transaction
- 28: registration data
- 201-204: token

- 31, 37: operation in normal mode
- 32: switch mode
- 33: operation in virtual local mode
- 34: switch mode back
- 35: partially normal operation
- 36: prepare wallets for normal mode

- 41: prepare transaction
- 42: perform transaction
- 43: log transaction

- 51: mode switching trigger
- 52a, 52b: virtual local token wallet
- 59: back switching trigger

- 61-63: hosted token wallet
- 64-66: token wallet in virtual local mode
- 67: registration management unit
- 68: registration data storage area
- 648-668: registration data
- 69: local wallet

## Claims

1. A secure wallet service provider unit (1a) of a transaction system (10), the transaction system (10) comprising token wallets (2a, 2b, 9a, 9b) and a remote token register (5), wherein local token wallets (9a) of the transaction system (10) exchange tokens of the transaction system (10) in local transactions (7),
the secure wallet service provider unit (1a) comprising a plurality of hosted token wallets (2a) of the transaction system,
in a normal mode the secure wallet service provider unit (1a) is configured to exchange tokens (204) between the hosted token wallets (2a) of the secure wallet service provider unit (1a) and other token wallets (2b) of the transaction system (10) in remote transactions (4);
**characterized in that**
the secure wallet service provider unit (1a) is configured to temporarily switch into a virtual local mode, and
wherein in the virtual local mode the secure wallet service provider unit (1a) is configured to exchange tokens (204) between the hosted token wallets (2a) and other token wallets (2b) of the transaction system (10) in virtual local transactions (27).

2. The secure wallet service provider unit (1a) of claim 1, wherein the secure wallet service provider unit (1a) further comprises a token exchange management unit (3a) for the hosted token wallets (2a) of the wallet service provider unit (1a),
preferably the token exchange management unit (3a) stores a mode status (20,25), indicating either the normal mode or the virtual local mode.

3. The secure wallet service provider unit (1a) of any of the preceding claims, wherein the secure wallet service provider unit (1a) - for a new token (203) of a hosted token wallet (2a) created or received in the virtual local mode - is configured to
- mark the new token as a virtual local mode token, not ready to be used in the normal mode, and/or
- at least partly store the new token separately from normal mode tokens, ready to be used in the normal mode, of the hosted token wallet (2a), preferably in a separate virtual local mode token storage area (23a) of the hosted token wallet (2a) or in a separate virtual local mode token wallet (52a) associated with the hosted token wallet (2a).

4. The secure wallet service provider unit (1a) of any of the preceding claims, wherein the secure wallet service provider unit (1a) temporarily switches (32) from the normal mode into the virtual local mode and switches back (34) to the normal mode, wherein preferably the secure wallet service provider unit (1a) - for at least one hosted token wallet (2a) used in the virtual local mode - prepares (36) the used hosted token wallet (2a) for the normal mode before using it in the normal mode.

5. The secure wallet service provider unit (1a) of any of the preceding claims, wherein the secure wallet service provider unit (1a) further comprises a registration data store (68) storing registration data (648, 658, 668) for at least one hosted token wallet (64, 65, 66) used in the virtual local mode,
wherein the registration data store (68) optionally temporarily stores registration data received from local wallets (69).

6. The secure wallet service provider unit (1a) of any of the preceding claims, wherein the secure wallet service provider unit (1a) further comprises a registration management unit (67) forwarding registration data received from local wallets (69) to the token register (5),
wherein the registration management unit (67) preferably first sends the registration data (648, 658, 668) of hosted token wallets (64, 65, 66) used in the virtual local mode to the token register (5) before forwarding registration data received from local wallets (69) to the token register (5).

7. The secure wallet service provider unit (1a) of any of the preceding claims, wherein the secure wallet service provider unit (1a) receives a mode switching trigger (21), preferably
the mode switching trigger (21) being received from the token register (5), another wallet service provider unit (1b) or a token issuer unit of the electronic transaction system (10), and/or
the mode switching trigger (21) comprising at least one digital signature.

8. The secure wallet service provider unit (1a) of any of the preceding claims, wherein the other token wallets (2b) are remote token wallets, preferably hosted token wallets of at least one other secure wallet service provider unit (1b).

9. The secure wallet service provider unit (1a) of any of the preceding claims, wherein in the electronic transaction system (10) a remote token exchange protocol is used in remote transactions and a local token exchange protocol is used in local transactions.

10. The secure wallet service provider unit (1a) of any of the preceding claims, wherein the secure wallet service provider unit (1a) is remotely connected to the token register (5) and/or to another wallet service provider unit (1b) and/or to the other token wallets via a network (6) and/or via a remote network communication protocol.

11. The secure wallet service provider unit (1a) of any of the preceding claims, wherein for the token exchange from the plurality of hosted token wallets (2a) with other hosted token wallets (2b) the secure wallet service provider unit (1a) exclusively uses remote transactions in the normal mode and/or exclusively virtual local transactions in the virtual local mode.

12. The secure wallet service provider unit (1a) of any of the preceding claims, wherein the hosted token wallets (2a) comprise:
at least one token (201-204), preferably each including a monetary token value and a token secret as token data elements; and/or
a wallet ID; and/or
a wallet authentication key; and/or
a wallet certificate, preferably for the wallet ID and/or the wallet authentication key.

13. The secure wallet service provider unit (1a) of any of the preceding claims, wherein the electronic transaction system (10) comprises a transaction log register, the secure wallet service provider unit (1a) is configured to send (43) log data to the transaction log register for each transaction.

14. The secure wallet service provider unit (1a) of any of the preceding claims, wherein the secure wallet service provider unit (1a) in the virtual local mode
checks a virtual local mode limit limiting a monetary value, preferably a sum of monetary values, exchanged in the virtual local mode, the limit preferably comprising at least one of:
- a limit for the plurality of hosted token wallets of the secure wallet service provider unit, and/or
- a limit for a single hosted token wallet, preferably either generally defined for all hosted token wallets of the secure wallet service provider unit (1a) or for the hosted token wallet individually; and/or
checks if a hosted token wallet (2a) to be used is blocked for the virtual local mode.

15. An electronic transaction system (10), preferably a central bank digital currency system, comprising:
- at least one secure wallet service provider unit (1a) according to any of the preceding claims 1 to 14;
- a remote token register (5); and
- optionally local token wallets (9a).
